# FASCICULE DE BREVET EUROPEEN

(11) **EP 4 452 757 B1**
(45) Date de publication et mention de la délivrance du brevet: **08.07.2026**
(21) Numéro de dépôt: 22847603.2
(22) Date de dépôt: 21.12.2022
(51) Int. Cl.: B64D 29/00, B64C 7/02, B64D 45/00, A62C 3/08, F02C 7/25, F02C 7/24

(54) **INTÉGRATION D'UN EXTINCTEUR EN ZONE "FEU" D'UNE TURBOMACHINE**
INTEGRATION EINES FEUERLÖSCHERS IN DER "HEISSEN ZONE" EINES TURBOSTRAHLTRIEBWERKS
INTEGRATION OF A FIRE EXTINGUISHER IN THE "HOT ZONE" OF A TURBOMACHINE

(30) Priorité: 22.12.2021 FR 2114218
(43) Date de publication de la demande: 30.10.2024
(73) Titulaire: Safran Nacelles, 76700 Gonfreville-l'Orcher (FR)
(72) Inventeur: GONIDEC, Patrick, 77550 MOISSY-CRAMAYEL (FR); BOILEAU, Patrick André, 77550 MOISSY-CRAMAYEL (FR)
(74) Mandataire: Regimbeau
(86) Numéro de dépôt international: PCT/FR2022/052459
(87) Numéro de publication internationale: WO 2023/118745

(56) Documents cités:
- FR-A1- 3 041 936
- US-A1- 2019 054 332
- US-B2- 7 735 571

## Description

### DOMAINE DE L'INVENTION

La présente invention concerne un ensemble pour un turboréacteur d'aéronef, comprenant une nacelle et un dispositif d'extinction incendie comprenant au moins un réservoir monté sur la nacelle.

### ETAT DE LA TECHNIQUE

Un aéronef comprend classiquement au moins système propulsif pour en assurer la propulsion. Le système propulsif comprend une turbomachine, par exemple un turboréacteur ou un turbopropulseur.

La turbomachine comprend une soufflante, au moins un compresseur, une chambre de combustion, au moins une turbine, et une tuyère d'échappement des gaz. Par exemple, la turbomachine peut comprendre un compresseur basse pression et un compresseur haute pression, et une turbine haute pression et une turbine basse pression.

Un turboréacteur peut être un turboréacteur double flux, dans lequel la masse d'air aspirée par la soufflante est divisée en un flux primaire, qui traverse l'au moins un compresseur, la chambre de combustion et l'au moins une turbine, et un flux secondaire, qui est concentrique avec le flux primaire.

La turbomachine est logée dans une nacelle. La nacelle est fixée à un pylône, ou mât, qui supporte la turbomachine, le pylône étant lui-même fixé sous une aile de l'aéronef.

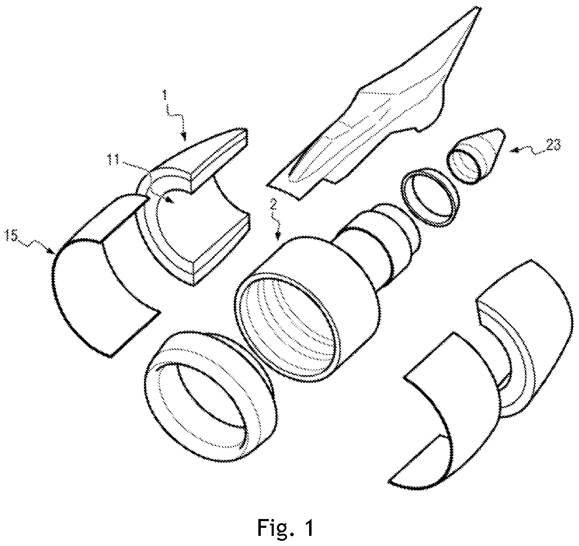

Ainsi qu'illustrée en figure 1, une nacelle 1 peut comprendre une entrée d'air en amont de la turbomachine 2, l'amont et l'aval étant définis par rapport au sens de l'écoulement des gaz dans la turbomachine 2 en fonctionnement, un carter de soufflante 15 entourant la soufflante de la turbomachine 2, un carter intermédiaire entourant au moins partiellement un compresseur de la turbomachine 2, et une structure interne fixe 11 (en anglais « IFS » : Internal Fixed Structure). La structure interne fixe 11 entoure au moins la chambre de combustion de la turbomachine 2. La tuyère d'éjection 23 de la turbomachine est située en aval de la structure interne fixe 11.

Une « zone "feu" » de la turbomachine correspond à une zone dans laquelle il faut pouvoir éteindre un feu qui s'y déclencherait. Une zone « feu » est ainsi définie par la présence possible d'un fluide inflammable (huile, kérosène, huile hydraulique...) simultanément avec une source d'ignition (circuit électrique, pièces chaudes, source d'étincelles...).

La structure interne fixe de la nacelle et la chambre de combustion de la turbomachine peuvent délimiter une zone "feu" dite « chaude ». Cette zone "feu" chaude est soumise à des températures élevées lors du fonctionnement de la turbomachine, typiquement supérieures à 110°C, par exemple qui peuvent environner les 250°C voire les 500°C, y compris en l'absence de feu dans la turbomachine.

Une autre zone "feu" peut être délimitée par le carter de soufflante 15 de la nacelle et la soufflante, et correspond à une zone "feu" dite « froide ». Cette zone "feu" froide est soumise lors du fonctionnement de la turbomachine en l'absence de feu à des températures inférieures à celles de la zone "feu" chaude.

Afin d'éviter d'endommager des structures vitales de l'aéronef lorsqu'une turbomachine prend feu, la réglementation actuelle exige la présence d'un dispositif d'extinction qui soit apte à éteindre un feu se déclarant dans n'importe laquelle des zones "feu" de la turbomachine, en particulier dans la zone "feu" dite « chaude » de la turbomachine.

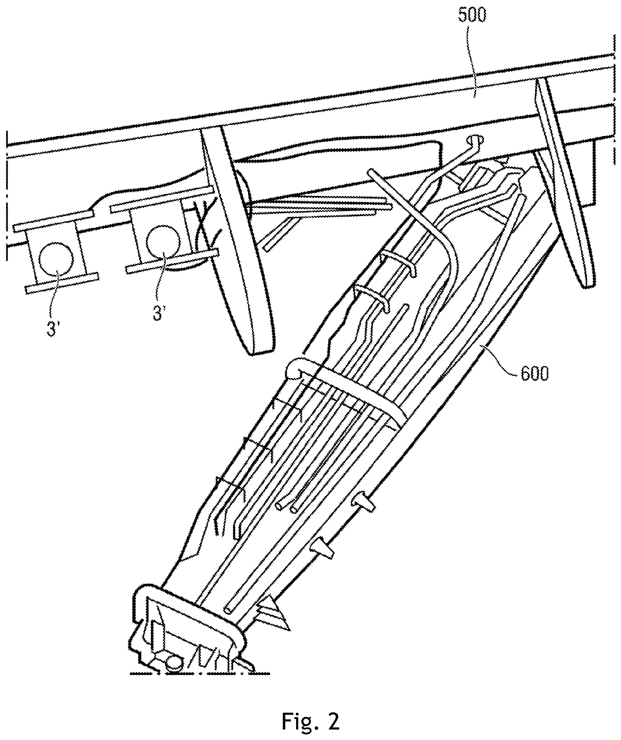

Les dispositifs d'extinction actuels sont classiquement montés sous l'aile de l'aéronef, à proximité du pylône sur lequel la turbomachine est montée, ou directement sous le pylône, de sorte à être portée par le pylône ou par l'aile. Ces dispositifs d'extinction peuvent être constitués de bouteilles de gaz sous pression sphériques, qui résistent à la pression interne en limitant la masse de la bouteille : par exemple, il peut s'agir de bonbonnes réparties sous le pylône et contenant du Halon, qui est un agent gazeux à base de bromotrifluorométhane. La figure 2 illustre un tel dispositif d'extinction comprenant des bouteilles de gaz sous pression sphériques 3' montées sous l'aile 500 de l'aéronef, à proximité du pylône 600. Ces dispositifs d'extinction permettent d'asperger les zones "feu" en cas de déclenchement d'un feu dans l'une des zones "feu", sur commande du pilote qui est informé du feu lorsque les capteurs d'incendie détectent un incendie dans la turbomachine.

Néanmoins, l'agent d'extinction est injecté par la partie supérieure de la nacelle, en une position qui peut être relativement éloignée du feu à éteindre. Ainsi, une grande quantité d'agent d'extinction doit être injectée pour parvenir à submerger la zone "feu" en vue d'éteindre le feu, ce qui génère des pertes importantes d'agent d'extinction. Cela engendre un accroissement significatif du poids du dispositif d'extinction, et donc de la turbomachine. Des canalisations peuvent être mises en place pour acheminer l'agent d'extinction depuis les bonbonnes jusqu'aux zones "feu" afin d'injecter l'agent d'extinction au plus près du feu. Néanmoins, ces canalisations sont complexes, pèsent lourd, et s'il l'on veut injecter au plus près dans la nacelle, la prolongation de ces lignes nécessite des raccordements supplémentaires lors du démontage et du remontage de la nacelle pour des raisons de maintenance de la turbomachine, ce qui engendre de la complexité et des risques pour la sécurité en cas de mauvais raccordement. En outre, les bonbonnes, intégrées sous l'aile ou sous le pylône, dégradent l'aérodynamisme de l'écoulement au niveau du pylône, ce qui diminue le rendement propulsif de la turbomachine.

Enfin, le Halon est un gaz à très haut effet de serre, donc très polluant. Il tend donc à être remplacé par d'autres agents d'extinctions moins polluants, tels que le NOVEC 1230, également appelé FK-5-1-12, qui est un agent liquide qui se gazéifie en sortie d'une buse de pulvérisation.

Des dispositifs d'extinction connus sont adaptés pour injecter un agent d'extinction liquide autre que le Halon par le biais d'une seringue pressurisée. Par exemple, le document FR 3,077,989 A1 décrit un dispositif d'extinction comprenant un réservoir de stockage d'un agent d'extinction, une chambre à volume variable, un piston situé entre le réservoir et la chambre à volume variable, et un générateur de gaz configuré pour mettre sous pression l'agent d'extinction afin de le distribuer à l'extérieur du réservoir.

D'autres dispositifs d'extinction, tels que celui décrit dans le document FR 3,060,652 A1, prévoient d'étouffer le feu de zones "feu" d'une nacelle par constriction, à l'aide d'un générateur de gaz adapté pour déplacer une paroi souple d'extinction vers la zone "feu" de la nacelle, afin de se passer d'agents d'extinction chimiques.

Enfin, le document FR 3,041,936 A1 décrit un dispositif d'extinction comprenant un réservoir d'agent d'extinction situé en amont du carter de soufflante de la nacelle. L'agent d'extinction peut être libéré par l'explosion d'une cartouche explosive. Néanmoins, le dispositif d'extinction est alors situé loin de la zone "feu" dite « chaude » de la nacelle, et les extincteurs ne sont pas configurés pour y injecter l'agent d'extinction. Par conséquent, ce dispositif d'extinction ne permet pas d'éteindre efficacement un feu se déclenchant dans cette zone "feu" chaude. Eteindre un feu en zone "feu" chaude supposerait d'ajouter des canalisations complexes pour relier l'extincteur à la structure interne fixe de la nacelle. En outre, le dispositif d'extinction lui-même ne pourrait pas être déplacé au niveau de la structure interne fixe de la nacelle, car il présente une résistance limitée aux températures élevées, et ne supporterait pas les températures auxquelles est soumise la zone "feu" chaude de la nacelle.

Les documents US 7 735 571 et US 2019/054332 décrivent des dispositions particulières d'extincteurs dans un turboréacteur : dans la nacelle ou directement sur la surface de la turbomachine.

### EXPOSE DE L'INVENTION

Un objectif de la présente invention est de proposer un ensemble adapté pour assurer une extinction dans une zone "feu" dite « chaude » d'une turbomachine avec une efficacité améliorée par rapport à l'art antérieur.

Selon un premier aspect, l'invention concerne un ensemble pour une turbomachine d'aéronef selon la revendication 1 ou la revendication 2.

Certaines caractéristiques préférées mais non limitatives de l'ensemble décrit ci-dessus figurent dans les revendications dépendantes 3 à 10.

Selon un deuxième aspect, l'invention concerne un système propulsif pour un aéronef selon la revendication 11.

Selon un troisième aspect, l'invention concerne un aéronef selon la revendication 12 ou la revendication 13.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
La figure 1, déjà commentée, est une vue éclatée d'une nacelle et d'un turboréacteur d'un aéronef selon l'art antérieur.
La figure 2, déjà commentée, est une vue en perspective filaire d'un ensemble d'extinction pour un aéronef selon l'art antérieur.
La figure 3 est une vue en coupe en perspective d'un ensemble comprenant une nacelle et un dispositif d'extinction selon un mode de réalisation de l'invention.
Les figures 4a et 4b sont des vues de côté schématiques d'un ensemble selon un mode de réalisation de l'invention et d'un turboréacteur, dans lequel un extincteur est situé entre la protection thermique et la surface interne respectivement de la structure interne fixe de la nacelle et du carter de soufflante de la nacelle.
La figure 5 est une vue de côté schématique d'un extincteur d'un ensemble selon un mode de réalisation de l'invention.
Les figures 6a et 6b sont respectivement une vue de face schématique et une vue de côté schématique d'un extincteur monté sur une structure fixe de nacelle d'un ensemble selon un mode de réalisation de l'invention.
Les figures 7a et 7b sont respectivement une vue de côté schématique et une vue de dessous schématique d'un extincteur monté sur une structure fixe de nacelle d'un ensemble selon un mode de réalisation de l'invention, dans lequel un capot de la protection thermique est monté sur la structure fixe de la nacelle.
Les figures 8a et 8b sont respectivement une vue de côté schématique et une vue de dessous schématique d'un extincteur monté sur une structure fixe de nacelle d'un ensemble selon un mode de réalisation de l'invention, dans lequel un capot de la protection thermique est monté sur l'extincteur.
La figure 9 est une vue de côté schématique d'une enceinte ventilée logeant un extincteur d'un ensemble selon un mode de réalisation de l'invention.
La figure 10 est une vue de côté schématique d'un ensemble selon un mode de réalisation de l'invention comprenant un couple de deux extincteurs associés à un point d'injection prédéterminé, et d'un turboréacteur.
La figure 11 est une vue de côté schématique d'un couple de deux extincteurs d'un ensemble selon un mode de réalisation de l'invention, les deux extincteurs étant associés à un point d'injection prédéterminé et comprenant une buse de pulvérisation commune.
La figure 12 est une vue de côté schématique d'un couple de deux extincteurs d'un ensemble selon un mode de réalisation de l'invention, les deux extincteurs étant associés à un point d'injection prédéterminé et comprenant deux buses de pulvérisation séparées.
La figure 13a est une vue en perspective schématique d'un ensemble selon un mode de réalisation de l'invention comprenant deux extincteurs montés sur la structure fixe de la nacelle par le biais de ferrures de la structure fixe.
La figure 13b est une vue en perspective schématique d'une ferrure de la structure fixe adaptée pour monter un extincteur sur la structure fixe d'une nacelle d'un ensemble selon un mode de réalisation de l'invention.
La figure 14 est une vue de côté schématique d'un ensemble selon un mode de réalisation de l'invention comprenant un extincteur dont le réservoir et le générateur de gaz sont séparés.

### DESCRIPTION DETAILLEE DE L'INVENTION

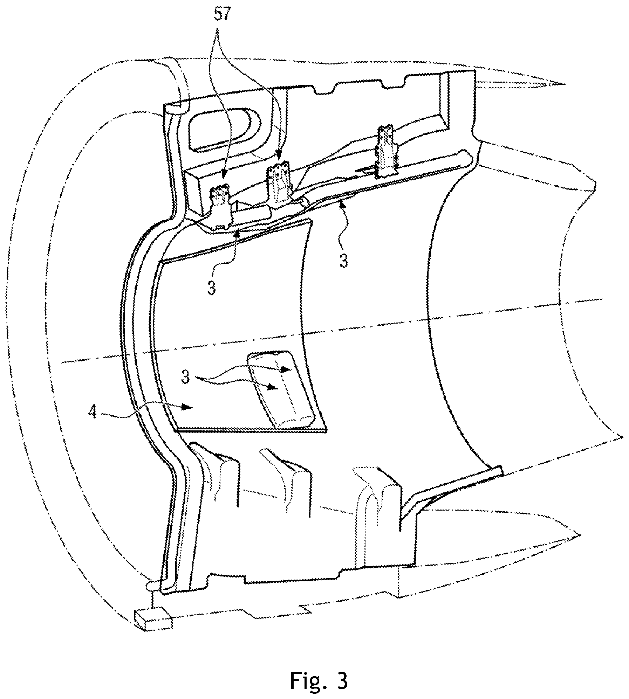

Un ensemble pour une turbomachine 2 d'aéronef est illustré à titre d'exemple non limitatif en figures 3, 4 et 10. L'ensemble comprend :
- une nacelle 1 s'étendant sensiblement autour d'un axe longitudinal, ladite nacelle 1 comprenant une structure fixe 11, 15, 16 adaptée pour être disposée autour de la turbomachine 2, ladite structure fixe 11, 15, 16 comprenant une surface interne 12 adaptée pour délimiter avec une surface externe de la turbomachine 2 une zone "feu" 100, 200 de la nacelle 1,
- une protection thermique 4 recouvrant la surface interne 12 de la structure fixe 11, 15, 16 de la nacelle 1 au niveau de la zone "feu" 100, 200 de la nacelle 1, et
- un extincteur 3 conçu pour éteindre un feu dans la zone "feu" 100, 200 de la nacelle 1, ledit extincteur 3 comprenant un réservoir 31 adapté pour contenir un agent d'extinction.

Ledit réservoir 31 est situé entre la protection thermique 4 et la surface interne 12 de la structure fixe 11, 15, 16 de la nacelle 1.

Dans la présente demande, l'amont et l'aval sont définis par rapport au sens d'écoulement normal du gaz à travers la turbomachine. L'axe longitudinal selon lequel s'étend principalement la nacelle 1 correspond à un axe de rotation de la soufflante de la turbomachine. Un axe radial est un axe perpendiculaire à l'axe longitudinal et passant par lui. Un axe transversal est un axe perpendiculaire à l'axe longitudinal et ne passant pas par lui. Une direction longitudinale, respectivement une direction radiale et transversale, correspond à la direction de l'axe longitudinal, respectivement de l'axe radial et transversal.

Les termes interne et externe, respectivement, sont utilisés en référence à une direction radiale de sorte que la partie ou la face interne d'un élément est plus proche de l'axe longitudinal que la partie ou la face externe du même élément.

La turbomachine peut être par exemple un turboréacteur ou un turbopropulseur.

La turbomachine comprend une soufflante, au moins un compresseur, une chambre de combustion, au moins une turbine, et une tuyère d'échappement des gaz. Par exemple, la turbomachine peut comprendre un compresseur basse pression et un compresseur haute pression, et une turbine haute pression et une turbine basse pression.

Un turboréacteur peut être un turboréacteur double flux, dans lequel la masse d'air aspirée par la soufflante est divisée en un flux primaire qui traverse l'au moins un compresseur, la chambre de combustion et l'au moins une turbine, et un flux secondaire qui est concentrique avec le flux primaire. Le flux primaire circule dans une veine primaire Vp et le flux secondaire circule dans une veine secondaire Vs.

La turbomachine 2 est logée dans une nacelle 1. La soufflante peut donc être carénée. La nacelle 1 est fixée à un pylône 600, ou mât, qui supporte la turbomachine 2, ledit pylône 600 étant fixé sous une aile 500 de l'aéronef.

La nacelle 1 peut comprendre une entrée d'air en amont de la turbomachine 2, un carter de soufflante 15 entourant la soufflante, un carter intermédiaire 16 entourant au moins un compresseur de la turbomachine 2, et une structure interne fixe 11 (en anglais « IFS » : Internal Fixed Structure) entourant au moins la chambre de combustion de la turbomachine 2. La structure interne fixe 11 peut entourer en outre tout ou partie des étages de compresseur et/ou de turbine de la turbomachine 2. Le carter intermédiaire 16 peut être situé dans le prolongement immédiat de la structure interne fixe 11. La tuyère d'échappement des gaz 23 de la turbomachine 2 est située en aval de la structure interne fixe 11.

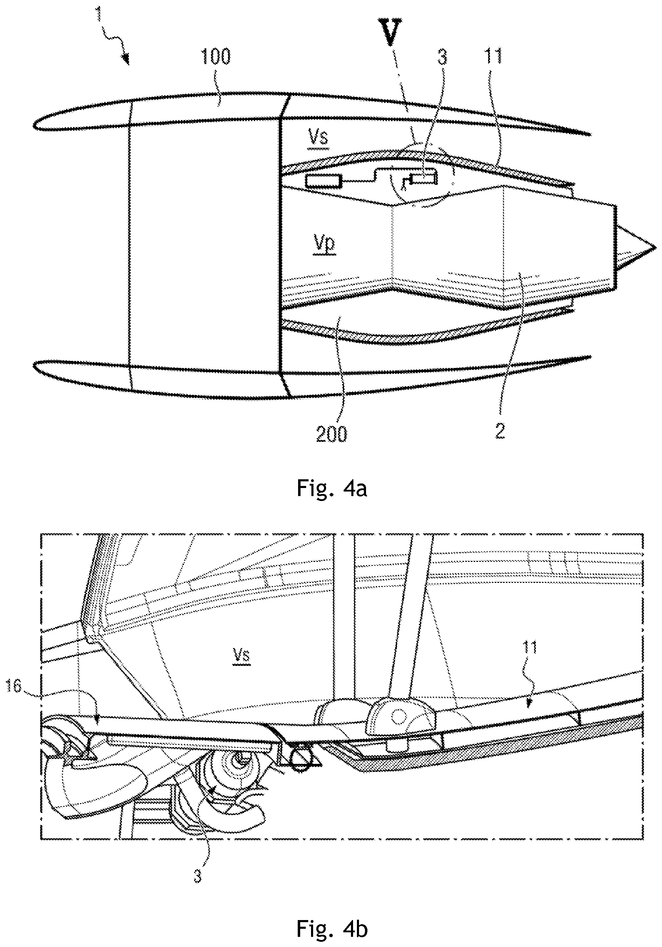

Une zone "feu" 200 de la nacelle 1 délimitée par la surface interne 12 de la structure interne fixe 11 et une surface externe de la chambre de combustion de la turbomachine 2 est une zone "feu" 200 dite « chaude ». Cette zone "feu" chaude 200 est soumise à des températures élevées lors du fonctionnement normal de la turbomachine 2, c'est-à-dire en l'absence d'incendie, typiquement supérieures à 110° C, par exemple qui peuvent environner les 250°C voire les 500°C. La figure 4a illustre un exemple simplifié d'une telle zone "feu" 200.

Une zone "feu" dite « froide » 100, également représentée sur la figure 4a, est délimitée par le carter de soufflante et/ou le carter intermédiaire 16 de la nacelle 1 et la soufflante. La zone "feu" froide 100 est soumise lors du fonctionnement normal de la turbomachine 2, c'est-à-dire en l'absence d'incendie, à des températures inférieures à celles de la zone "feu" 200.

L'extincteur 3 de l'ensemble décrit ci-dessus est intégré dans la structure même de la nacelle 1, et est donc porté par la nacelle 1, et non par l'aile 500 ou le pylône 600 comme dans l'art antérieur. Ainsi, le réservoir 31 n'encombre plus l'espace au niveau du pylône 600, ce qui permet d'optimiser avec plus de souplesse son positionnement et ses dimensions.

La structure fixe 11, 15, 16 peut correspondre à la structure interne fixe 11, au carter de soufflante 15, et/ou au carter intermédiaire 16. Par exemple, au moins un extincteur 3 peut être intégré entre la protection thermique 4 et la surface interne 12 de la structure interne fixe 11 de la nacelle 1, c'est-à-dire au niveau de la chambre de combustion de la turbomachine 2. En alternative ou en outre, au moins un extincteur 3 peut être intégré entre la protection thermique 4 et la surface interne 12 du carter intermédiaire 16 de la nacelle 1, c'est-à-dire au niveau d'un compresseur de la turbomachine 2. En alternative ou en outre, au moins un extincteur 3 peut être intégré entre la protection thermique 4 et la surface interne 12 du carter de soufflante 15 de la nacelle 1, c'est-à-dire au niveau de la soufflante de la turbomachine 2.

Lorsque l'extincteur 3 est intégré au niveau du carter intermédiaire 16, l'extincteur 3 peut être fixé à une surface interne (ou virole interne) du carter intermédiaire 16, en une position interne par rapport à la surface interne (ou virole interne) du carter intermédiaire 16. Ladite surface interne (ou virole interne) du carter intermédiaire 16 délimite une paroi interne de la veine secondaire Vs. L'extincteur 3 peut être situé en amont de la structure interne fixe 11, à proximité, par exemple en amont et à proximité immédiate de la structure interne fixe 11, ainsi qu'illustré à titre d'exemple non limitatif en figure 4b.

Dans tous les cas, le réservoir 31 de l'extincteur 3 est situé en une position externe par rapport à la protection thermique 4, et en une position interne par rapport à la surface interne 12 de la structure fixe 11, 15, 16. Ainsi, la protection thermique 4 protège non seulement la surface interne 12 de la nacelle 1, mais également l'extincteur 3, des températures élevées qui peuvent être rencontrées dans les zones "feu" 100, 200 de la turbomachine 2, en particulier dans la zone "feu" 200 dite « chaude » de la turbomachine 2. L'extincteur 3 bénéficie donc de la réduction de température apportée par la protection thermique 4. L'intégration de l'extincteur 3 prend ainsi en compte la résistance limitée de l'extincteur 3 aux températures élevées, et permet ainsi le bon fonctionnement de l'extincteur 3 au plus près de la zone "feu" 100, 200.

En outre, la protection de l'extincteur 3 contre les températures élevées est réalisée par la protection thermique 4, qui est prévue pour recouvrir la structure fixe 11, 15, 16 de la nacelle 1 au vu des fortes contraintes thermiques s'exerçant sur la nacelle 1 au niveau de la zone "feu" 100, 200, afin de maintenir la surface interne 12 de la structure fixe 11, 15, 16 à des températures acceptables pour les matériaux qui la composent, de sorte à prolonger sa durée de vie. Ainsi, la protection de l'extincteur 3 contre les températures élevées est effectuée sans nécessiter d'élément de protection supplémentaire.

De plus, l'extincteur 3 est intégré au niveau de la structure fixe 11, 15, 16 de la nacelle 1, au sein même de la zone 100, 200 qu'il est conçu pour protéger du feu. Le fonctionnement de l'extincteur 3 est ainsi optimisé. En particulier, l'intégration de l'extincteur 3 dans la structure fixe 11, 15, 16 de la nacelle 1 permet de réduire la longueur des canalisations d'amenée de l'agent d'extinction, voire de les supprimer. En outre, l'extincteur 3 étant intégré au plus près des points de départ du feu à éteindre, il peut éteindre le feu à sa naissance, ce qui contribue à diminuer la quantité d'agent d'extinction à utiliser pour éteindre un feu se déclarant dans la zone "feu" 100, 200.

La structure fixe 11, 15, 16 peut comprendre en outre une surface externe 13 radialement opposée à la surface interne 12. La surface externe 13 de la structure fixe 11, 15, 16 de la nacelle 1 peut être adaptée pour délimiter à l'extérieur une portion de veine secondaire Vs de la turbomachine 2. Ainsi, l'air du flux secondaire circule, au niveau de la structure fixe 11, 15, 16, au contact et à l'extérieur de la structure fixe 11, 15, 16, plus précisément au contact et à l'extérieur de la surface externe 13 de la structure fixe 11, 15, 16.

La protection thermique 4 peut correspondre à une paroi fixée sur la structure fixe 11, 15, 16 de la nacelle 1, par exemple à une paroi constituée d'un revêtement thermiquement isolant.

La protection thermique 4 est située en une position radialement plus interne que la surface interne 12 de la nacelle 1. La protection thermique 4 peut être radialement espacée de la surface interne 12, ou être accolée à la surface interne 12.

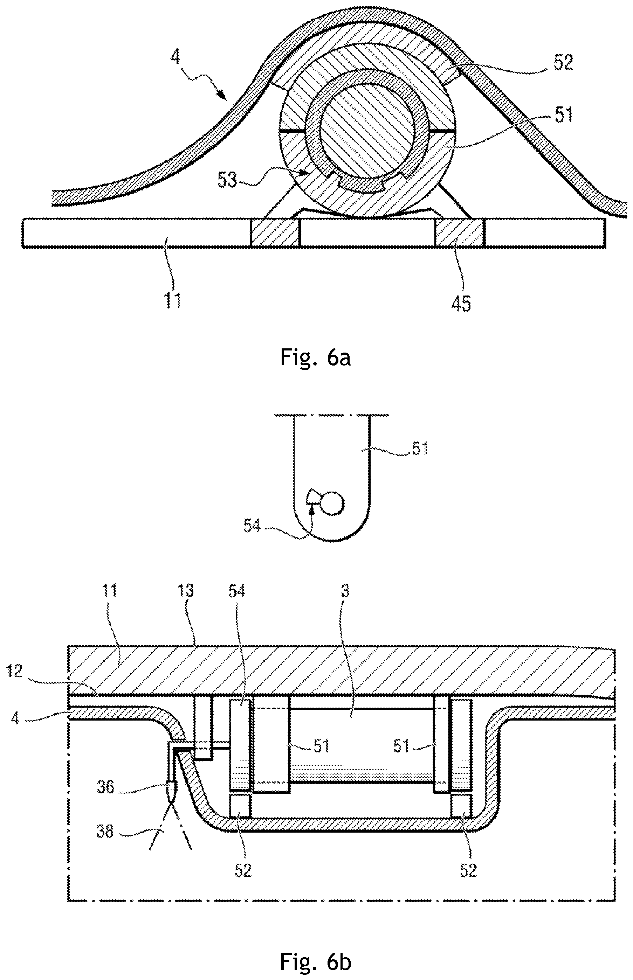

Au niveau de l'extincteur 3, et ainsi qu'illustré à titre d'exemple non limitatif en figures 6a à 9, la protection thermique 4 est configurée pour délimiter au moins partiellement une enceinte 60 adaptée pour loger tout ou partie de l'extincteur 3. L'enceinte 60 est située au niveau de la zone "feu" 100, 200 et est adaptée pour entourer l'extincteur 3, de sorte à le protéger des températures élevées de la zone "feu" 100, 200, notamment lorsque l'extincteur 3 est intégré dans la zone "feu" chaude 200.

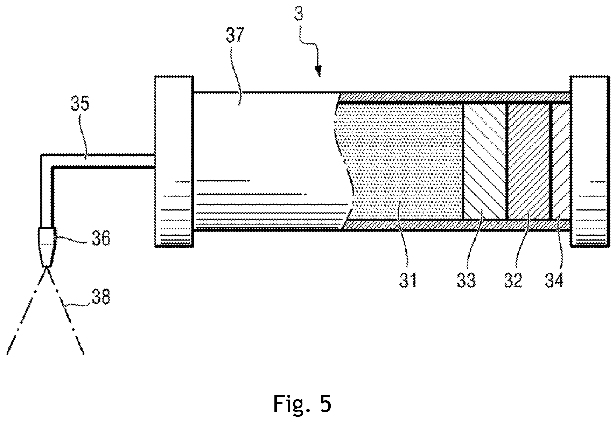

L'extincteur 3, illustré à titre d'exemple non limitatif en figures 5 et 6b, peut comprendre en outre une chambre à volume variable 32, un piston 33 situé entre le réservoir 31 et la chambre à volume variable 32, un générateur de gaz 34 configuré pour injecter un gaz propulsif dans la chambre à volume variable 32, ladite injection de gaz propulsif étant propre à engendrer un mouvement du piston 33 pour mettre sous pression l'agent d'extinction, et une buse de pulvérisation 36 configurée pour expulser l'agent d'extinction mis sous pression hors du réservoir 31.

L'extincteur 3 peut comprendre un corps 37 sensiblement cylindrique délimitant le réservoir 31 et la chambre à volume variable 32, et logeant le piston 33. Le corps 37 de l'extincteur 3 comprend une paroi de corps sensiblement cylindrique, ladite paroi de corps étant fermée en une extrémité par une paroi de base en forme de disque. La paroi de base, la paroi de corps et le piston 33 délimitent ensemble le réservoir 31 d'agent d'extinction.

Un orifice peut être formé dans la paroi de base du corps 37 de l'extincteur 3, par exemple en une position centrale de ladite paroi de base. L'orifice est raccordé à la buse de pulvérisation 36, soit directement, soit par le biais d'un tuyau d'alimentation 35 du réservoir 31. Ainsi, l'agent d'extinction contenu dans le réservoir 31 est expulsé hors du réservoir 31 via l'orifice lorsque le piston 33 met sous pression l'agent d'extinction. Le tuyau d'alimentation 35 ou la buse 36 traverse la protection thermique 4, de sorte que l'agent d'extinction est expulsé directement dans la zone "feu" 200.

On pourra avantageusement disposer entre la buse 36 et le corps 37 de l'inverseur, par exemple le long du tuyau 35, une partie isolante 35bis adaptée pour créer une rupture de pont thermique entre la buse 36 et le reste de l'extincteur, afin de ne pas conduire par la buse 36 ou le tuyau 35, la chaleur dans le corps 37 de l'extincteur 3.

Le piston 33 peut comprendre un corps en forme de disque, adapté pour être déplacé en translation le long d'un axe du cylindre du corps 37 de l'extincteur 3, par une différence de pression entre le réservoir 31 et la chambre à volume variable 32.

Le générateur de gaz 34 forme un dispositif de propulsion de l'agent d'extinction. Le générateur de gaz 34 peut être activé lorsqu'une extinction est souhaitée, de sorte à provoquer l'expulsion de l'agent d'extinction vers la zone "feu" 100, 200.

La chambre à volume variable 32 dans laquelle le gaz propulsif est injecté est délimitée par la paroi de corps sensiblement cylindrique de l'extincteur 3, le piston 33, et une paroi de séparation avec le générateur de gaz 34. Un volume de la chambre à volume variable 32 peut varier entre un volume nul, le piston 33 étant alors adjacent à la paroi de séparation avec le générateur de gaz 34, au contact de ladite paroi de séparation, et le volume du réservoir 31 étant maximum, et un volume correspondant à un volume du réservoir 31, le piston 33 étant alors adjacent à la paroi de base du corps 37 de l'extincteur 3, au contact de ladite paroi de base, et le volume du réservoir 31 étant nul.

Lorsque le générateur de gaz 34 est activé, il engendre une génération de gaz propulsif dans la chambre à volume variable 32, qui conduit à augmenter le volume de la chambre à volume variable 32 au fur et à mesure que le gaz propulsif est généré, en augmentant la pression du dans la chambre à volume variable 32. Le mouvement du piston 33 sous la pression du gaz propulsif propulse l'agent d'extinction hors du réservoir 31 et vers la buse de pulvérisation 36. L'agent d'extinction peut alors transiter dans le tuyau d'alimentation 35 jusqu'à atteindre la buse 36. La buse de pulvérisation 36 permet la pulvérisation de l'agent d'extinction dans la zone "feu" 100, 200, en un jet de pulvérisation 38. Le jet de pulvérisation 38 issu de la buse 36 est un jet de l'agent d'extinction, et permet la vaporisation et la dissémination de l'agent d'extinction sous forme gazeuse ou diphasique dans la zone "feu" 100, 200.

L'agent d'extinction peut être le NOVEC 1230, également appelé FK-5-1-12.

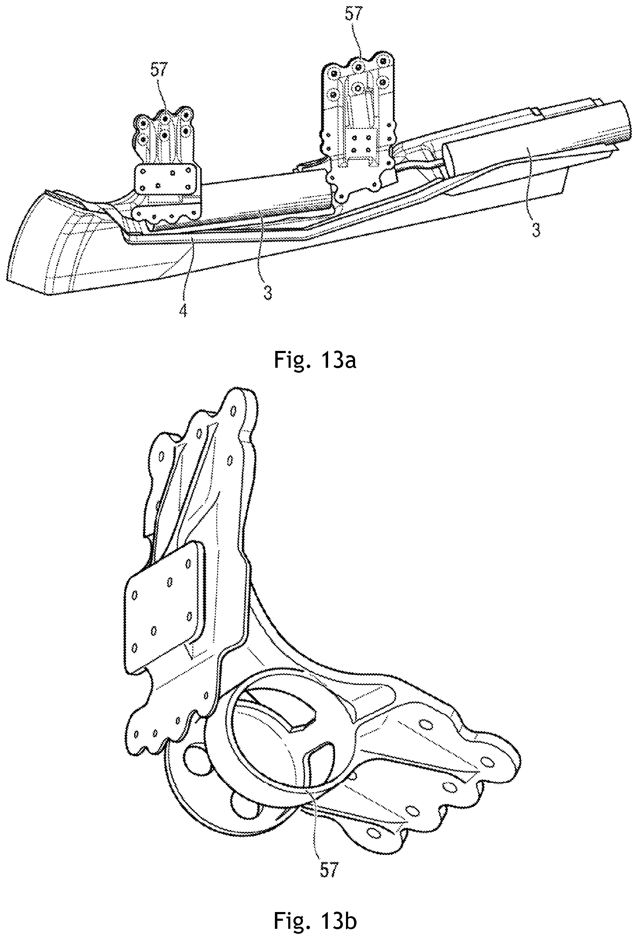

L'extincteur 3, en particulier le réservoir 31 de l'extincteur 3, peut être monté sur la structure fixe 11, 15, 16 de la nacelle 1 par l'intermédiaire d'un support d'extincteur 51. Le support d'extincteur 51 peut être intégré dans une ou plusieurs pièce(s) déjà existante(s) de la structure fixe 11, 15, 16 de la nacelle 1. Par exemple, et ainsi qu'illustré à titre d'exemple non limitatif en figures 2, 13a et 13b, une ou plusieurs ferrures 57, dites ferrure(s) bumper, de la structure fixe 11, 15, 16 de la nacelle 1 peu(ven)t être adapté(s) pour recevoir le corps 37 de l'extincteur 3 de sorte à fixer l'extincteur 3 à la structure fixe 11, 15, 16 de la nacelle 1. Ainsi, la fixation de l'extincteur 3 sur la structure fixe 11, 15, 16 est réalisée au moyen de supports déjà existants, le cas échéant avec de légères modifications, et ne nécessite donc pas de composants additionnels. En variante, le support d'extincteur 51 permettant la fixation de l'extincteur 3 sur la structure fixe 11, 15, 16 peut être un support d'extincteur 51 dédié ajouté à la structure fixe 11, 15, 16.

Ainsi qu'illustré à titre d'exemple non limitatif en figure 6b, le support d'extincteur 51 peut former un berceau entourant au moins partiellement le réservoir 31, le cas échéant entourant le corps 37 de l'extincteur 3. Le support d'extincteur 51 peut présenter plusieurs supports distincts et espacés entourant chacun le corps 37 de l'extincteur 3, et fixés chacun à la structure fixe 11, 15, 16, en particulier à la surface interne 12 de la structure fixe 11, 15, 16, en des points de fixation respectifs distincts et éloignés. Ainsi, le support d'extincteur 51 permet une fixation particulièrement fiable de l'extincteur 3. Le support d'extincteur 51 peut en outre comprendre un support adapté pour entourer partiellement le tuyau d'alimentation 35. Ainsi, la position du tuyau d'alimentation 35, et donc de la buse 36, est fixée avec fiabilité.

Le support d'extincteur 51, ainsi qu'illustré à titre d'exemple non limitatif en figure 6a, peut traverser la structure fixe 11, 15, 16 depuis sa surface interne 12 jusqu'à sa surface externe 13, donc jusqu'à la veine secondaire Vs d'écoulement du flux secondaire. Le support d'extincteur 51 forme alors un puits de chaleur, ou pont thermique 45. Notamment, lorsque l'extincteur 3 est disposé entre la protection thermique 4 et la surface interne 12 de la structure interne fixe 11, le puits de chaleur 45 permet de refroidir encore davantage l'extincteur 3.

L'extincteur 3 peut être monté fixement sur la structure fixe 11, 15, 16 de la nacelle 1 de sorte qu'une position et une orientation du réservoir 31 et/ou de la buse de pulvérisation 36 sont fixes par rapport à la surface interne 12 de la structure fixe 11, 15, 16 de la nacelle 1. La structure fixe 11, 15, 16 maintient ainsi en place le réservoir 31 et/ou la buse 36 dans une position et une orientation qui sont prédéterminées pour assure une extinction efficace d'un feu se déclenchant dans la zone "feu" 100, 200. La structure fixe 11, 15, 16 de la nacelle 1 ne permet alors pas le montage du réservoir 31 et/ou de la buse de pulvérisation 36 dans une position et orientation qui dégraderaient l'extinction du feu.

Par exemple, deux supports de buse de pulvérisation 36 et/ou deux supports de réservoir 31 peuvent être présents dans l'enceinte 60 logeant le réservoir 31 de l'extincteur 3, par exemple montés fixement sur la surface interne 12 de la structure fixe 11, 15, 16. Deux anneaux respectifs sont montés sur la buse de pulvérisation 36 et/ou sur le réservoir 31. Les deux supports de buse 36 et/ou de réservoir 31 sont adaptés pour loger les deux anneaux respectifs montés sur la buse 36 et/ou le réservoir 31, dans une position et une orientation fixes. Par exemple, les deux supports de buse 36 et/ou de réservoir 31 peuvent présenter des empreintes particulières distinctes l'une de l'autre et avoir chacun une géométrie non axisymétrique, les anneaux de la buse 36 et/ou du réservoir 31 présentant des géométries complémentaires de celles des supports de buse 36 et/ou de réservoir 31. Ainsi, les supports de buse 36 et/ou de réservoir 31 et les anneaux de la buse 36 et/ou du réservoir 31 imposent une position et une orientation de montage unique de la buse 36 et/ou du réservoir 31 dans l'enceinte 60.

Le support d'extincteur 51 peut comprendre un détrompeur du support d'extincteur 53, ainsi qu'illustré à titre d'exemple non limitatif en figure 6a. Le détrompeur du support d'extincteur 53 permet de caler la position et l'orientation du support d'extincteur 51, qui fixe le réservoir 31 à la surface interne 12 de la structure fixe 11, 15, 16. Le détrompeur du support d'extincteur 53 permet ainsi d'imposer et de fixer la position et l'orientation du réservoir 31 par rapport à la surface interne 12 de la structure fixe 11, 15, 16. Par exemple, le détrompeur du support d'extincteur 53 peut comprendre un berceau conique pour détromper le sens de montage de l'extincteur 3, ou deux berceaux avec des clés différentes.

Le support d'extincteur 51 peut comprendre, en alternative ou en outre, un détrompeur de buse 54 permettant de caler la position et l'orientation de la buse de pulvérisation 36 par rapport à la surface interne 12 de la structure fixe 11, 15, 16. Par exemple, le détrompeur de buse 54 peut comprendre une clé de détrompage. Ainsi, il est possible de caler sans erreur et dans une direction optimale la position et l'orientation du jet de pulvérisation 38 de la buse 36.

Lorsque la position et l'orientation de la buse 36 seule, et non du réservoir 31, sont prédéterminées, le support d'extincteur 51 peut comprendre en outre un dispositif articulé et flexible adapté pour raccorder la buse de pulvérisation 36 au réservoir 31, de sorte à permettre un changement d'orientation et de position relative de la buse 36 par rapport au réservoir 31. En particulier, le tuyau d'alimentation 35 peut être un tuyau souple permettant de réorienter et de repositionner la buse de pulvérisation 36 indépendamment du réservoir 31 de l'extincteur 3. Ainsi, il est possible de respecter les contraintes de montage du réservoir 31 sur la structure fixe 11, 15, 16, qui peuvent imposer une position et/ou une orientation particulières du réservoir 31, tout en optimisant la position et l'orientation du jet de pulvérisation 38 de la buse 36, ce qui permet d'optimiser l'efficacité de l'extinction de feu par l'extincteur 3.

Le générateur de gaz 34 est monté entre la protection thermique 4 et la surface externe 13 de la structure fixe 11, 15, 16 de la nacelle 1, qui délimite la veine secondaire Vs.

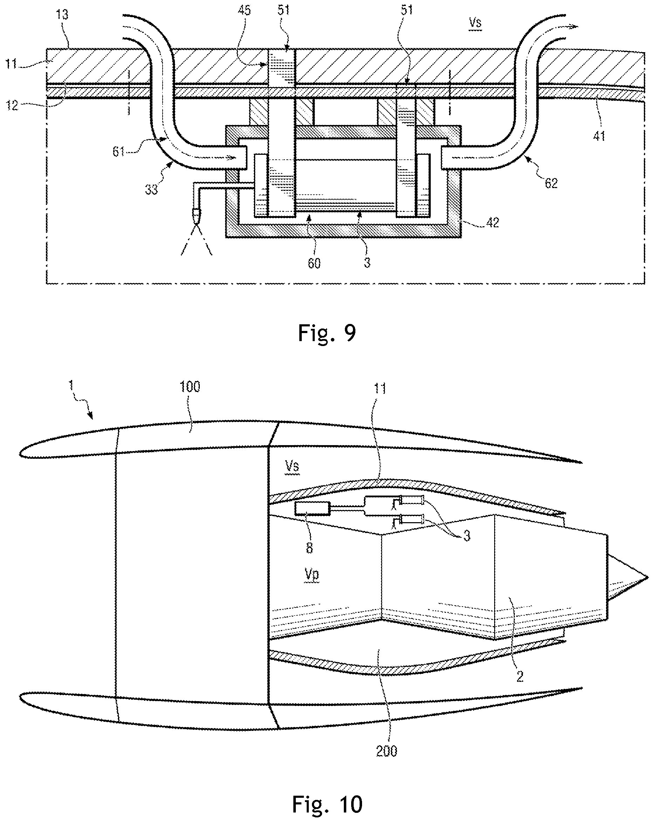

Dans un premier mode de réalisation, illustré à titre d'exemple non limitatif en figures 6b et 9, le réservoir 31 et le générateur de gaz 34 sont tous deux disposés entre la protection thermique 4 et la structure fixe 11, 15, 16 de la nacelle 1, plus particulièrement dans l'enceinte 60 délimitée par la protection thermique 4 au niveau de l'extincteur 3. Le générateur de gaz 34 est alors accolé à la chambre à volume variable 32 et débouche directement dans la chambre à volume variable 32, de sorte que le gaz est directement généré dans la chambre à volume variable 32. Le corps 37 sensiblement cylindrique du réservoir 31 loge alors en outre le générateur de gaz 34.

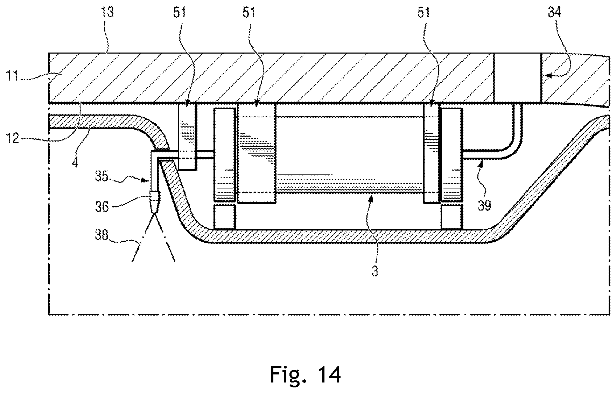

Dans un deuxième mode de réalisation, illustré à titre d'exemple non limitatif en figure 14, le générateur de gaz 34 est monté à distance du réservoir 31, entre la surface interne 12 et la surface externe 13 de la structure fixe 11, 15, 16 de la nacelle 1. L'extincteur 3 comprend alors en outre un tube de connexion 39 adapté pour raccorder le générateur de gaz 34 et la chambre à volume variable 32.

Le réservoir 31 et le générateur de gaz 34 sont alors séparés et intégrés en deux endroits distincts de la structure fixe 11, 15, 16 de la nacelle 1. En effet, certaines zones de la structure fixe 11, 15, 16 sont particulièrement chaudes, telles que les parties au niveau de et en aval de la chambre de combustion de la turbomachine 2, c'est-à-dire lorsque l'extincteur 3 est situé entre la protection thermique 4 et la surface interne 12 de la structure interne fixe 11 de la nacelle. Or, le générateur de gaz 34 est plus sensible à la chaleur que le réservoir 31, en ce qu'il est particulièrement vulnérable à la surchauffe. Par conséquent, séparer le générateur de gaz 34 du réservoir 31 permet de monter le générateur de gaz 34 dans une zone moins chaude de la structure fixe 11, 15, 16 de la nacelle 1.

En particulier, monter le générateur de gaz 34 entre la surface interne 12 et la surface externe 13 de la structure interne fixe 11 de la nacelle 1 permet de l'éloigner radialement du flux primaire et de le rapprocher du flux secondaire, par rapport au réservoir 31 qui est monté entre la protection thermique 4 et la surface interne 12 de la structure interne fixe 11. Ainsi, le générateur de gaz 34, qui est plus sensible à la chaleur, est logé dans une zone plus froide de la structure interne fixe 11 de la nacelle 1 et bénéficie du flux convectif apporté par l'écoulement de la veine secondaire du moteur.

Or, du fait de son petit volume, qui est plus faible que celui du réservoir 31, le générateur de gaz 34 peut être installé entre la surface interne 12 et la surface externe 13 de la structure fixe 11, 15, 16 de la nacelle 1. Ce deuxième mode de réalisation permet donc d'optimiser l'intégration de l'extincteur 3 en zone "feu" 100, 200 et du générateur de gaz 34 en zone refroidie, du fait de la présence des modules séparés du réservoir 31 et du générateur de gaz 34.

Le générateur de gaz 34 peut être monté de sorte qu'une face du générateur de gaz 34 soit au contact avec la surface externe 13 de la structure fixe 11, 15, 16, voire être monté affleurant de la surface externe 13 au niveau d'une ouverture formée dans ladite surface externe 13. Ainsi, le générateur de gaz 34 est déporté au voisinage immédiat de la surface externe 13 de la structure fixe 11, 15, 16 de la nacelle 1, et peut ainsi être efficacement refroidi par le flux secondaire froid qui circule dans la veine secondaire Vs qui est délimitée à l'extérieur par la surface externe 13 de la structure fixe 11, 15, 16.

En alternative ou en outre, le générateur de gaz 34 peut être monté au contact d'un puits de chaleur, ou pont thermique 45, de la structure fixe 11, 15, 16, en particulier de la structure interne fixe 11, ledit puits de chaleur 45 traversant la structure fixe 11, 15, 16 depuis sa surface interne 12 jusqu'à sa surface externe 13 pour déboucher dans la veine secondaire Vs. Ainsi, le générateur de gaz 34 est efficacement refroidi par le puits de chaleur.

Le tube de connexion 39 peut être un tuyau qui raccorde le générateur de gaz 34 et la chambre à volume variable 32 de l'extincteur 3, et permet ainsi d'injecter le gaz propulsif qui est généré par le générateur de gaz 34 dans la chambre à volume variable 32, en vue de déplacer le piston 33 pour propulser l'agent d'extinction dans la zone "feu" 100, 200, tout en séparant physiquement le générateur de gaz 34 du corps 37 de l'extincteur 3. Le générateur de gaz 34 peur également selon l'objectif recherché être accolé directement au corps 37 du réservoir 3 sans tube de connexion 39 mais de telle manière que le générateur de gaz 34 pénètre directement la structure fixe 11, 15, 16 lorsque l'extincteur 3 est installé.

La protection thermique 4 peut comprendre un capot 42 d'accès à l'extincteur 3, qui délimite au moins partiellement l'enceinte 60 adaptée pour loger l'extincteur 3.

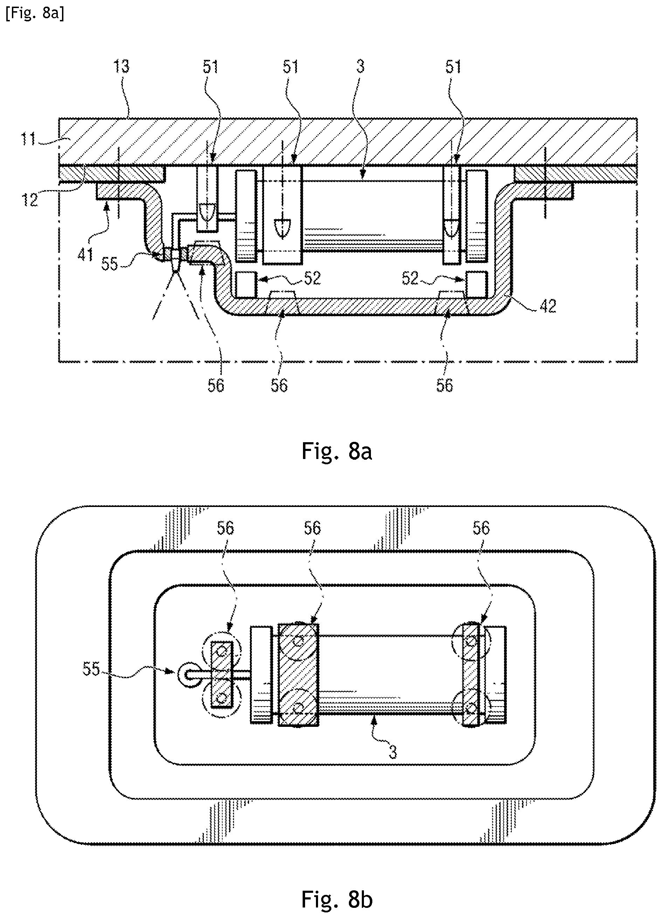

Dans un premier exemple de réalisation, illustré à titre d'exemple non limitatif en figures 8a et 8b, le capot 42 est monté directement sur l'extincteur 3 par le biais de premières fixations 52. L'extincteur 3 sert alors de support au capot 42. Le capot 42 peut être retiré pour permettre d'accéder à l'extincteur 3 sans avoir à démonter la ou les autre(s) partie(s) 41 de la protection thermique 4, le démontage du capot 42 seul permettant d'accéder à l'extincteur 3. Le capot 42 peut présenter une forme adaptée pour favoriser sa préhension lors du démontage et permettre ainsi de saisir et de démonter en une seule étape l'extincteur 3 avec le capot 42, le capot 42 étant alors démonté avec l'extincteur 3.

Le capot 42 peut comprendre en outre un ou plusieurs bouchon(s) démontable(s) 56, donc amovible(s), permettant une fois retiré(s) d'accéder à travers la protection thermique 4 au support d'extincteur 51, y compris au support de buse de pulvérisation 36 lorsqu'il existe, et/ou au tuyau d'alimentation 35 de l'extincteur 3.

Une ouverture 43 peut être formée dans le capot 42 de sorte à permettre le passage du tuyau d'alimentation 35 ou de la buse de pulvérisation 36 à travers le capot 42.

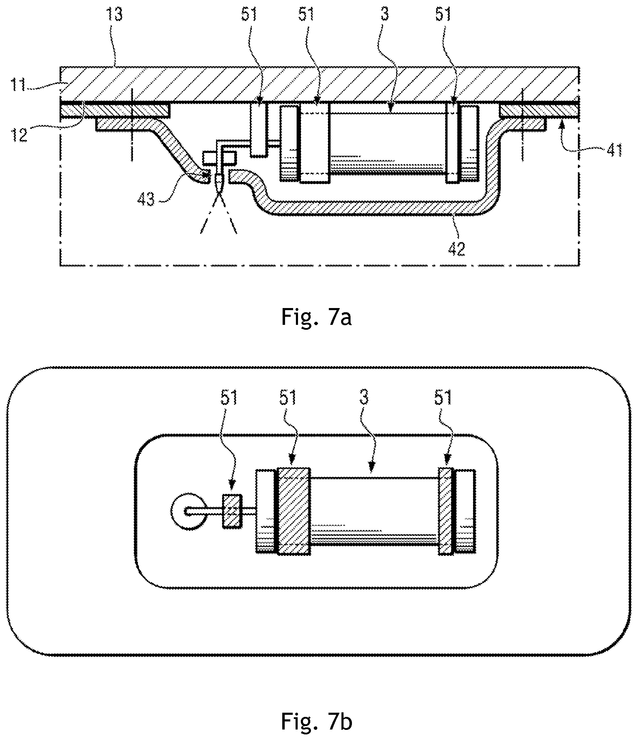

Dans un deuxième exemple de réalisation, illustré à titre d'exemple non limitatif en figures 7a et 7b, le capot 42 de la protection thermique 4 est monté sur au moins une autre partie 41 de la protection thermique 4 par le biais de deuxièmes fixations. La surface interne 12 de la structure fixe 11, 15, 16 sert alors de support à l'ensemble de la protection thermique 4.

Le capot 42 peut comprendre un passe cloison 55 fixe au niveau de la buse de pulvérisation 36. Le passe cloison 55 permet le passage de la buse 36 et permet de retirer le capot 42 sans démonter la buse 36, tout en assurant l'étanchéité thermique entre la zone chaude et l'enceinte 60 dans laquelle l'extincteur 3 est situé.

L'enceinte 60 adaptée pour loger l'extincteur 3 peut être seulement partiellement délimitée par la protection thermique 4, l'enceinte 60 étant en outre partiellement délimitée par la surface interne 12 de la structure fixe 11, 15, 16, ainsi qu'illustré à titre d'exemple non limitatif en figure 6a. En d'autres termes, la protection thermique 4 est adaptée pour former l'enceinte 60 avec la surface interne 12 de la structure fixe 11, 15, 16. Ainsi, au niveau de l'extincteur 3, la protection thermique 4 est radialement espacée de la surface interne 12 de la structure fixe 11, 15, 16 de la nacelle 1, de sorte ce que l'espace entre la protection thermique 4 et la nacelle 1 forme ladite enceinte 60.

En variante, et ainsi qu'illustré à titre d'exemple non limitatif en figure 9, l'enceinte 60 adaptée pour loger l'extincteur 3 peut être entièrement délimitée par la protection thermique 4. La protection thermique 4 est alors disposée de sorte à entourer entièrement l'extincteur 3, la protection thermique 4 étant par ailleurs fixée à la surface interne 12 de la structure fixe 11, 15, 16 de la nacelle 1 au moyen d'un support de protection thermique. Le support de protection thermique peut entourer le support d'extincteur 51, de sorte à protéger le support d'extincteur 51 des fortes températures de la zone « feu » 100, 200.

L'enceinte 60 adaptée pour loger l'extincteur 3 peut être une enceinte ventilée comprenant une entrée de ventilation 61 et une sortie de ventilation 62. L'enceinte 60 ventilée comprend donc un circuit de ventilation spécifique, de sorte que l'extincteur 3 bénéficie d'une ventilation dédiée et est ainsi plus efficacement refroidi. En particulier, lorsque le générateur de gaz 34 est logé dans le corps 37 de l'extincteur 3 dans le premier mode de réalisation, cette configuration permet de maintenir l'environnement accueillant l'extincteur 3 et en particulier le générateur de gaz 34 à des températures plus faibles. L'écoulement d'air autour de l'extincteur 3 est calibré pour assurer une température toujours compatible du bon fonctionnement de l'extincteur 3, en particulier du générateur de gaz 34 dans le premier mode de réalisation, et de sa durabilité.

L'entrée de ventilation 61 et/ou la sortie de ventilation 62 peuvent chacune être un trou de ventilation, ou un conduit d'amenée de ventilation. Le trou ou le conduit débouche d'une part dans l'enceinte 60 ventilée, et d'autre part dans la veine secondaire Vs et/ou à l'extérieur de la nacelle 1. Ainsi, l'enceinte 60 logeant l'extincteur 3 est ventilée par prélèvement d'air frais de la veine secondaire Vs et/ou de l'extérieur de la nacelle 1.

L'entrée de ventilation 61 est situé en amont de l'enceinte 60 et capte l'écoulement frais de la veine secondaire Vs et/ou de l'extérieur de la nacelle 1. La sortie de ventilation 62 est situé en aval de l'enceinte 60 et éjecte l'écoulement réchauffé vers la veine secondaire Vs et/ou vers l'extérieur de la nacelle 1. L'air frais peut être prélevé de la veine secondaire Vs en utilisant la différence de pression entre la veine secondaire Vs et la zone "feu" 100, 200, la pression dans la veine secondaire Vs étant en général plus élevée que dans la zone "feu" 100, 200.

L'air frais prélevé de la veine secondaire Vs peut être utilisé pour actionner un système d'éjecteur à trompe permettant de prélever en outre de l'air frais à l'extérieur de la nacelle 1, l'air frais prélevé à l'extérieur de la nacelle 1 et l'air frais prélevé dans la veine secondaire Vs se mélangeant de sorte à refroidir encore davantage l'enceinte 60 ventilée, et ainsi à protéger encore mieux l'extincteur 3 contre la chaleur ambiante.

L'ensemble peut comprendre en outre une unité de contrôle. L'unité de contrôle est adaptée pour activer l'extincteur 3, c'est-à-dire pour entraîner une expulsion de l'agent d'extinction hors du réservoir 31 de l'extincteur 3. L'unité de contrôle permet de déclencher de façon centralisée une ou plusieurs extinctions, de façon simultanée ou successive. Ainsi, l'unité de contrôle permet de commander les extincteurs 3 de manière autonome et séparée, par exemple en fonction de la zone et/ou de l'ampleur de l'incendie.

L'unité de contrôle peut être localisée dans la zone "feu" chaude 200, dans la zone "feu" froide 100, dans le compartiment de soufflante, dans le mât, etc. Un câble électrique peut être présent pour relier l'unité de contrôle avec l'extincteur 3, plus particulièrement avec le générateur de gaz 34.

L'ensemble peut comprendre au moins un couple de deux extincteurs 3 configurés pour expulser l'agent d'extinction au niveau d'un même point d'injection prédéterminé, ainsi qu'illustré à titre d'exemple non limitatif en figure 10. Par exemple, l'ensemble peut comprendre en tout deux extincteurs 3 tels que décrits ci-dessus, les deux extincteurs 3 formant un couple d'extincteurs 3 configuré pour expulser l'agent d'extinction au niveau d'un même point d'injection prédéterminé. Chaque couple de deux extincteurs 3 est associé à un même point d'injection prédéterminé, c'est-à-dire que les deux extincteurs 3 d'un même couple d'extincteurs 3 sont configurés pour expulser l'agent d'extinction au voisinage immédiat du point d'injection prédéterminé.

L'unité de contrôle est adaptée pour activer les deux extincteurs 3 dudit couple indépendamment l'un de l'autre, un seul des deux extincteurs 3, ou en variante les deux extincteurs 3, étant activés à chaque demande d'extinction. Ainsi, les deux extincteurs 3 d'un même couple peuvent être activés séquentiellement de sorte que deux injections d'agent d'extinction puissent être effectuées consécutivement et indépendamment l'une de l'autre à la demande du pilote et pour un même point d'injection prédéterminé. L'ensemble peut donc réaliser deux essais d'extinction consécutifs et indépendants, ce qui est requis par la réglementation actuelle des dispositifs d'extinction embarqués en vol.

L'ensemble peut comprendre plusieurs couples d'extincteurs 3, configurés pour expulser l'agent d'extinction au niveau de plusieurs points d'injection prédéterminés espacés les uns des autres. Ainsi, l'extinction d'un feu peut être optimisée en fonction de l'endroit du feu et/ou de l'ampleur du feu. Par exemple, l'ensemble peut comprendre quatre couples d'extincteurs 3 adaptés pour expulser l'agent d'extinction au niveau de quatre points d'injections prédéterminés répartis dans et/ou autour de la zone "feu" 100, 200.

Les deux extincteurs 3 d'un même couple d'extincteurs 3 peuvent être situés à proximité l'un de l'autre, voire sensiblement adjacents l'un à l'autre.

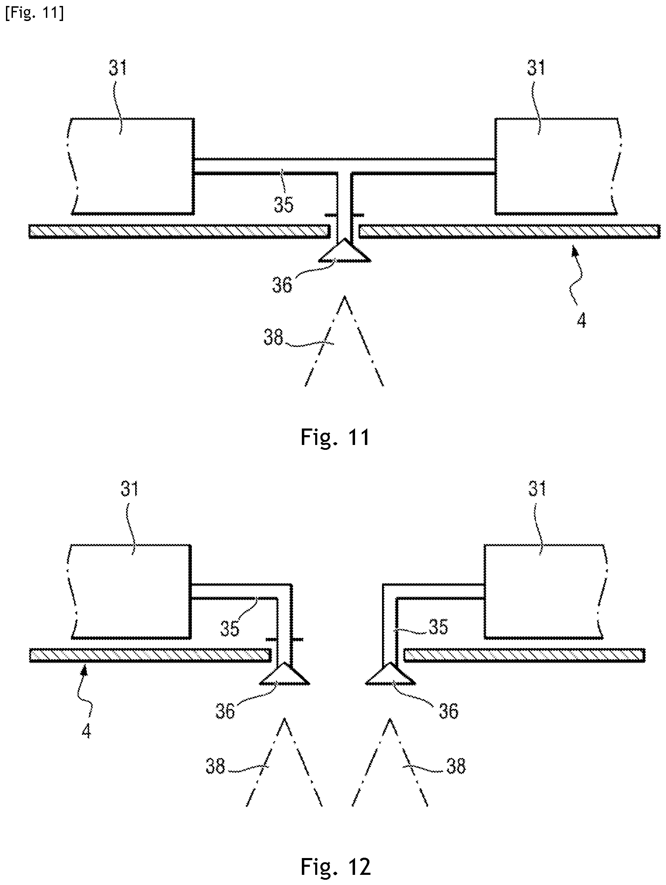

Chacun des deux extincteurs 3 du couple peut être adapté pour expulser l'agent d'extinction au niveau du point d'injection prédéterminé par l'intermédiaire d'une buse de pulvérisation 36 commune aux deux extincteurs 3 du couple, les réservoirs 31 de chacun des deux extincteurs 3 du couple étant raccordés à ladite buse de pulvérisation 36 commune, ainsi qu'illustré à titre d'exemple non limitatif en figure 11. La buse de pulvérisation 36 commune est située au niveau du point d'injection prédéterminé. Chaque réservoir 31 du couple d'extincteurs 3 comprend alors une vanne de déclenchement indépendante, ce qui permet de réaliser deux extinctions consécutives par la même buse de pulvérisation 36 commune.

En variante, chacun des deux extincteurs 3 peut comprendre une buse de pulvérisation 36 respective propre à l'extincteur 3, le couple de deux extincteurs 3 comprenant deux buses 36 séparées, ainsi qu'illustré à titre d'exemple non limitatif en figure 12. Les buses de pulvérisation 36 sont alors situées à proximité immédiate l'une de l'autre, voire sensiblement adjacentes l'une à l'autre, de sorte à être toutes deux adaptées pour expulser l'agent d'extinction au niveau du point d'injection prédéterminé. Les réservoirs 31 des deux extincteurs 3 sont chacun raccordés à la buse de pulvérisation 36 respective associée au réservoir 31 en question.

Un système propulsif pour un aéronef peut comprendre un ensemble tel que décrit ci-dessus, et une turbomachine 2. La structure fixe 11, 15, 16 de la nacelle 1 est adaptée pour être disposée autour de ladite turbomachine 2.

Un aéronef peut comprendre un système propulsif tel que décrit ci-dessus. Chaque extincteur 3 de l'ensemble est situé entre la protection thermique 4 et la surface interne 12 de la structure fixe 11, 15, 16 de la nacelle. Ainsi, les extincteurs 3 sont uniquement compris au niveau du système propulsif, l'aéronef étant dépourvu d'extincteurs dans les ailes et/ou dans le fuselage.

## Revendications

1. Ensemble pour une turbomachine (2) d'aéronef, comprenant :
- une nacelle (1) s'étendant sensiblement autour d'un axe longitudinal, ladite nacelle (1) comprenant une structure fixe (11, 15, 16) adaptée pour être disposée autour de la turbomachine (2), ladite structure fixe (11, 15, 16) comprenant une surface interne (12) adaptée pour délimiter avec une surface externe de la turbomachine (2) une zone "feu" (100, 200) de la nacelle (1),
- une protection thermique (4) recouvrant la surface interne (12) de la structure fixe (11, 15, 16) de la nacelle (1) au niveau de la zone "feu" (100, 200) de la nacelle (1), et
- un extincteur (3) conçu pour éteindre un feu dans la zone "feu" (100, 200) de la nacelle (1), ledit extincteur (3) comprenant un réservoir (31) adapté pour contenir un agent d'extinction,
ledit réservoir (31) étant situé entre la protection thermique (4) et la surface interne (12) de la structure fixe (11, 15, 16) de la nacelle (1).

2. Ensemble pour une turbomachine (2) d'aéronef, comprenant :
- une nacelle (1) s'étendant sensiblement autour d'un axe longitudinal, ladite nacelle (1) comprenant une structure fixe (11, 15, 16) adaptée pour être disposée autour de la turbomachine (2), ladite structure fixe (11, 15, 16) comprenant une surface interne (12) adaptée pour délimiter avec une surface externe de la turbomachine (2) une zone "feu" (100, 200) de la nacelle (1),
- un extincteur (3) conçu pour éteindre un feu dans la zone "feu" (100, 200) de la nacelle (1), ledit extincteur (3) comprenant un réservoir (31) adapté pour contenir un agent d'extinction,
- une première protection thermique (41) recouvrant la surface interne (12) de la structure fixe (11, 15, 16) de la nacelle (1) au niveau de la zone "feu" (100, 200) de la nacelle (1),
- une deuxième protection thermique (42) délimitant entièrement une enceinte, la deuxième protection thermique (42) étant fixée à la surface interne (12) de la structure fixe (11, 15, 16) de la nacelle (1) au moyen d'un support de protection thermique,
l'extincteur (3) étant logé dans l'enceinte entièrement délimitée par la deuxième protection thermique (42) en étant entouré entièrement par la deuxième protection thermique (42).

3. Ensemble selon la revendication 1 ou la revendication 2, dans lequel l'extincteur (3) comprend en outre une chambre à volume variable (32), un piston (33) situé entre le réservoir (31) et la chambre à volume variable (32), un générateur de gaz (34) configuré pour injecter un gaz propulsif dans la chambre à volume variable (32), ladite injection de gaz propulsif étant propre à engendrer un mouvement du piston (33) pour mettre sous pression l'agent d'extinction, et une buse de pulvérisation (36) configurée pour expulser l'agent d'extinction mis sous pression hors du réservoir (31).

4. Ensemble selon la revendication 3, dans lequel l'extincteur (3) est monté fixement sur la structure fixe (11, 15, 16) de la nacelle (1) de sorte qu'une position et une orientation du réservoir (31) et/ou de la buse de pulvérisation (36) sont fixes par rapport à la surface interne (12) de la structure fixe (11, 15, 16).

5. Ensemble selon la revendication 3 ou la revendication 4 lorsqu'elles sont dépendantes de la revendication 1, dans lequel le générateur de gaz (34) est monté à distance du réservoir (31), entre la surface interne (12) et une surface externe (13) de la structure fixe (11, 15, 16) de la nacelle (1), et dans lequel l'extincteur (3) comprend en outre un tube de connexion (39) adapté pour raccorder le générateur de gaz (34) et la chambre à volume variable (32).

6. Ensemble selon la revendication 1 ou la revendication 5, ou selon la revendication 3 ou la revendication 4 lorsqu'elles sont dépendantes de la revendication 1, dans lequel la protection thermique (4) comprend un capot (42) d'accès à l'extincteur (3).

7. Ensemble selon l'une quelconque des revendications 1, 5 ou 6, ou selon la revendication 3 ou la revendication 4 lorsqu'elles sont dépendantes de la revendication 1, dans lequel la protection thermique (4) est configurée pour délimiter partiellement une enceinte (60) adaptée pour loger l'extincteur (3).

8. Ensemble selon la revendication 2, ou selon la revendication 3 ou la revendication 4 lorsqu'elles sont dépendantes de la revendication 2, ou selon la revendication 7, dans lequel l'enceinte (60) est une enceinte ventilée comprenant une entrée de ventilation (61) et une sortie de ventilation (62).

9. Ensemble selon l'une quelconque des revendications précédentes, comprenant au moins deux extincteurs (3) configurés pour expulser l'agent d'extinction au niveau d'un même point d'injection prédéterminé, comprenant en outre une unité de contrôle adaptée pour activer les deux extincteurs (3) dudit couple indépendamment l'un de l'autre, et dans lequel chacun des extincteurs (3) est adapté pour expulser l'agent d'extinction au niveau du point d'injection prédéterminé par l'intermédiaire d'une buse de pulvérisation (36) commune aux deux extincteurs (3), les réservoirs (31) de chacun des deux extincteurs (3) étant raccordés à ladite buse de pulvérisation (36) commune.

10. Ensemble selon l'une quelconque des revendications précédentes, dans lequel la structure fixe (11, 15, 16) est une structure interne fixe (11) de la nacelle (1).

11. Système propulsif pour un aéronef, comprenant un ensemble selon l'une quelconque des revendications précédentes et une turbomachine (2), la structure fixe (11, 15, 16) de la nacelle (1) étant adaptée pour être disposée autour de ladite turbomachine (2).

12. Aéronef comprenant un système propulsif comprenant un ensemble selon l'une quelconque des revendications 1, 5, 6 ou 7, ou selon l'une quelconque des revendications 3, 4, 9 ou 10 lorsqu'elles sont dépendantes de la revendication 1, et une turbomachine (2), la structure fixe (11, 15, 16) de la nacelle (1) étant adaptée pour être disposée autour de ladite turbomachine (2), dans lequel chaque extincteur (3) de l'ensemble est situé entre la protection thermique (4) et la surface interne (12) de la structure fixe (11, 15, 16) de la nacelle.

13. Aéronef comprenant un système propulsif comprenant un ensemble selon la revendication 2 ou la revendication 8, ou selon l'une quelconque des revendications 3, 4, 9 ou 10 lorsqu'elles sont dépendantes de la revendication 2, dans lequel chaque extincteur (3) de l'ensemble est logé dans l'enceinte entièrement délimitée par la deuxième protection thermique (42) en étant entouré entièrement par la deuxième protection thermique (42).

## Patentansprüche

1. Anordnung für ein Turbotriebwerk (2) eines Luftfahrzeugs, umfassend:
- eine Gondel (1), die sich im Wesentlichen um eine Längsachse herum erstreckt, wobei die Gondel (1) eine feste Struktur (11, 15, 16) umfasst, die dazu geeignet ist, um das Turbotriebwerk (2) herum angeordnet zu sein, wobei die feste Struktur (11, 15, 16) eine interne Oberfläche (12) umfasst, die dazu geeignet ist, mit einer externen Oberfläche des Turbotriebwerks (2) eine "Brandzone" (100, 200) der Gondel (1) abzugrenzen,
- eine Wärmeschutzvorrichtung (4), welche die interne Oberfläche (12) der festen Struktur (11, 15, 16) der Gondel (1) an der "Brandzone" (100, 200) der Gondel (1) abdeckt, und
- einen Feuerlöscher (3), der dazu ausgelegt ist, ein Feuer in der "Brandzone" (100, 200) der Gondel (1) zu löschen, wobei der Feuerlöscher (3) ein Reservoir (31) umfasst, das dazu geeignet ist, ein Löschmittel zu enthalten,
wobei sich das Reservoir (31) zwischen der Wärmeschutzvorrichtung (4) und der internen Oberfläche (12) der festen Struktur (11, 15, 16) der Gondel (1) befindet.

2. Anordnung für ein Turbotriebwerk (2) eines Luftfahrzeugs, umfassend:
- eine Gondel (1), die sich im Wesentlichen um eine Längsachse herum erstreckt, wobei die Gondel (1) eine feste Struktur (11, 15, 16) umfasst, die dazu geeignet ist, um das Turbotriebwerk (2) herum angeordnet zu sein, wobei die feste Struktur (11, 15, 16) eine interne Oberfläche (12) umfasst, die dazu geeignet ist, mit einer externen Oberfläche des Turbotriebwerks (2) eine "Brandzone" (100, 200) der Gondel (1) abzugrenzen,
- einen Feuerlöscher (3), der dazu ausgelegt ist, ein Feuer in der "Brandzone" (100, 200) der Gondel (1) zu löschen, wobei der Feuerlöscher (3) ein Reservoir (31) umfasst, das dazu geeignet ist, ein Löschmittel zu enthalten,
- eine erste Wärmeschutzvorrichtung (41), welche die interne Oberfläche (12) der festen Struktur (11, 15, 16) der Gondel (1) an der "Brandzone" (100, 200) der Gondel (1) abdeckt,
- eine zweite Wärmeschutzvorrichtung (42), die eine Einfassung vollständig abgrenzt, wobei die zweite Wärmeschutzvorrichtung (42) an der internen Oberfläche (12) der festen Struktur (11, 15, 16) der Gondel (1) mittels eines Trägers der Wärmeschutzvorrichtung befestigt ist,
wobei der Feuerlöscher (3) in der Einfassung, die durch die zweite Wärmeschutzvorrichtung (42) vollständig abgegrenzt ist, untergebracht ist, indem er von der zweiten Wärmeschutzvorrichtung (42) vollständig umgeben ist.

3. Anordnung nach Anspruch 1 oder Anspruch 2, wobei der Feuerlöscher (3) ferner eine Kammer mit variablem Volumen (32), einen Kolben (33), der sich zwischen dem Reservoir (31) und der Kammer mit variablem Volumen (32) befindet, einen Gasgenerator (34), der dazu konfiguriert ist, ein Treibgas in die Kammer mit variablem Volumen (32) einzuspritzen, wobei das Einspritzen von Treibgas dazu geeignet ist, eine Bewegung des Kolbens (33) zu erzeugen, um das Löschmittel unter Druck zu setzen, und eine Zerstäubungsdüse (36), die dazu konfiguriert ist, das unter Druck stehende Löschmittel aus dem Reservoir (31) auszustoßen, umfasst.

4. Anordnung nach Anspruch 3, wobei der Feuerlöscher (3) fest auf der festen Struktur (11, 15, 16) der Gondel (1) montiert ist, so dass eine Position und eine Orientierung des Reservoirs (31) und/oder der Zerstäubungsdüse (36) im Verhältnis zu der internen Oberfläche (12) der festen Struktur (11, 15, 16) unveränderlich sind.

5. Anordnung nach Anspruch 3 oder Anspruch 4, soweit sie von Anspruch 1 abhängen, wobei der Gasgenerator (34) von dem Reservoir (31) beabstandet zwischen der internen Oberfläche (12) und einer externen Oberfläche (13) der festen Struktur (11, 15, 16) der Gondel (1) montiert ist, und wobei der Feuerlöscher (3) ferner ein Verbindungsrohr (39) umfasst, das dazu geeignet ist, den Gasgenerator (34) und die Kammer mit variablem Volumen (32) zu verbinden.

6. Anordnung nach Anspruch 1 oder Anspruch 5, oder nach Anspruch 3 oder Anspruch 4, soweit sie von Anspruch 1 abhängen, wobei die Wärmeschutzvorrichtung (4) eine Haube (42) zum Zugriff auf den Feuerlöscher (3) umfasst.

7. Anordnung nach einem der Ansprüche 1, 5 oder 6, oder nach Anspruch 3 oder Anspruch 4, soweit sie von Anspruch 1 abhängen, wobei die Wärmeschutzvorrichtung (4) dazu konfiguriert ist, eine Einfassung (60), die dazu geeignet ist, den Feuerlöscher (3) unterzubringen, teilweise abzugrenzen.

8. Anordnung nach Anspruch 2, oder nach Anspruch 3 oder Anspruch 4, soweit sie von Anspruch 2 abhängen, oder nach Anspruch 7, wobei die Einfassung (60) eine belüftete Einfassung ist, die einen Belüftungseinlass (61) und einen Belüftungsauslass (62) umfasst.

9. Anordnung nach einem der vorhergehenden Ansprüche, umfassend mindestens zwei Feuerlöscher (3), die dazu konfiguriert sind, das Löschmittel an dem gleichen vorbestimmten Einspritzpunkt auszustoßen, ferner umfassend eine Steuereinheit, die dazu geeignet ist, die beiden Feuerlöscher (3) des Paars unabhängig voneinander zu aktivieren, und wobei jeder der Feuerlöscher (3) dazu geeignet ist, das Löschmittel an dem vorbestimmten Einspritzpunkt über eine Zerstäubungsdüse (36), die den beiden Feuerlöschern (3) gemeinsam ist, auszustoßen, wobei die Reservoire (31) jedes der beiden Feuerlöscher (3) mit der gemeinsamen Zerstäubungsdüse (36) verbunden sind.

10. Anordnung nach einem der vorhergehenden Ansprüche, wobei die feste Struktur (11, 15, 16) eine feste interne Struktur (11) der Gondel (1) ist.

11. Antriebssystem für ein Luftfahrzeug, umfassend eine Anordnung nach einem der vorhergehenden Ansprüche und ein Turbotriebwerk (2), wobei die feste Struktur (11, 15, 16) der Gondel (1) dazu geeignet ist, um das Turbotriebwerk (2) herum angeordnet zu sein.

12. Luftfahrzeug, umfassend ein Antriebssystem, das eine Anordnung nach einem der Ansprüche 1, 5, 6 oder 7, oder nach einem der Ansprüche 3, 4, 9 oder 10, soweit sie von Anspruch 1 abhängen, und ein Turbotriebwerk (2) umfasst, wobei die feste Struktur (11, 15, 16) der Gondel (1) dazu geeignet ist, um das Turbotriebwerk (2) herum angeordnet zu sein, wobei sich jeder Feuerlöscher (3) der Anordnung zwischen der Wärmeschutzvorrichtung (4) und der internen Oberfläche (12) der festen Struktur (11, 15, 16) der Gondel befindet.

13. Luftfahrzeug, umfassend ein Antriebssystem, das eine Anordnung nach Anspruch 2 oder Anspruch 8, oder nach einem der Ansprüche 3, 4, 9 oder 10, soweit sie von Anspruch 2 abhängen, umfasst, wobei jeder Feuerlöscher (3) der Anordnung in der Einfassung, die durch die zweite Wärmeschutzvorrichtung (42) vollständig abgegrenzt ist, untergebracht ist, indem er durch die zweite Wärmeschutzvorrichtung (42) vollständig umgeben ist.

## Claims

1. An assembly for an aircraft turbomachine (2), comprising:
- a nacelle (1) extending substantially around a longitudinal axis, said nacelle (1) comprising a fixed structure (11, 15, 16) suitable for being disposed around the turbomachine (2), said fixed structure (11, 15, 16) comprising an internal surface (12) suitable for delimiting with an external surface of the turbomachine (2) a "fire" zone (100, 200) of the nacelle (1),
- a thermal protection (4) covering the internal surface (12) of the fixed structure (11, 15, 16) of the nacelle (1) at the level of the "fire" zone (100, 200) of the nacelle (1), and
- an extinguisher (3) designed to extinguish a fire in the "fire" zone (100, 200) of the nacelle (1), said extinguisher (3) comprising a tank (31) suitable for containing an extinguishing agent,
said tank (31) being located between the thermal protection (4) and the internal surface (12) of the fixed structure (11, 15, 16) of the nacelle (1).

2. An assembly for an aircraft turbomachine (2), comprising:
- a nacelle (1) extending substantially around a longitudinal axis, said nacelle (1) comprising a fixed structure (11, 15, 16) suitable for being disposed around the turbomachine (2), said fixed structure (11, 15, 16) comprising an internal surface (12) suitable for delimiting with an external surface of the turbomachine (2) a "fire" zone (100, 200) of the nacelle (1),
- an extinguisher (3) designed to extinguish a fire in the "fire" zone (100, 200) of the nacelle (1), said extinguisher (3) comprising a tank (31) suitable for containing an extinguishing agent,
- a first thermal protection (41) covering the internal surface (12) of the fixed structure (11, 15, 16) of the nacelle (1) at the level of the "fire" zone (100, 200) of the nacelle (1),
- a second thermal protection (42) entirely delimiting an enclosure, the second thermal protection (42) being attached to the internal surface (12) of the fixed structure (11, 15, 16) of the nacelle (1) by means of a thermal protection support,
the extinguisher being housed in the enclosure entirely delimited by the second thermal protection (42) by being entirely surrounded by the second thermal protection (42).

3. The assembly as claimed in claim 1 or claim 2, wherein the extinguisher (3) further comprises a variable volume chamber (32), a piston (33) located between the tank (31) and the variable volume chamber (32), a gas generator (34) configured to inject a propellant gas into the variable volume chamber (32), said injection of propellant gas being suitable for giving rise to a movement of the piston (33) to pressurize the extinguishing agent, and a spraying nozzle (36) configured to expel the pressurized extinguishing agent out of the tank (31).

4. The assembly as claimed in claim 3, wherein the extinguisher (3) is mounted fixedly on the fixed structure (11, 15, 16) of the nacelle (1) such that a position and an orientation of the tank (31) and/or of the spraying nozzle (36) are fixed with respect to the internal surface (12) of the fixed structure (11, 15, 16).

5. The assembly as claimed in claim 3 or claim 4 when they are dependent on claim 1, wherein the gas generator (34) is mounted at a distance from the tank (31), between the internal surface (12) and an external surface (13) of the fixed structure (11, 15, 16) of the nacelle (1), and wherein the extinguisher (3) further comprises a connecting tube (39) suitable for connecting the gas generator (34) and the variable volume chamber (32).

6. The assembly as claimed in claim 1 or claim 5, or in claim 3 or claim 4 when they are dependent on claim 1, wherein the thermal protection (4) comprises a cowl (42) for accessing the extinguisher (3).

7. The assembly as claimed in any of claims 1, 5 or 6, or in claim 3 or claim 4 when they are dependent on claim 1, wherein the thermal protection (4) is configured to partially delimit an enclosure (60) suitable for housing the extinguisher (3).

8. The assembly as claimed in claim 2, or in claim 3 or claim 4 when they are dependent on claim 2, or in claim 7, wherein the enclosure (60) is a ventilated enclosure comprising a ventilation inlet (61) and a ventilation outlet (62).

9. The assembly as claimed in any of the preceding claims, comprising at least two extinguishers (3) configured to expel the extinguishing agent at the level of one and the same previously determined injection point, further comprising a control unit suitable for activating the two extinguishers (3) of said pair independently of one another, and wherein each of the extinguishers (3) is suitable for expelling the extinguishing agent at the level of the previously determined injection point by way of a spraying nozzle (36) shared by the two extinguishers (3), the tanks (31) of each of the two extinguishers (3) being connected to said shared spraying nozzle (36).

10. The assembly as claimed in any of the preceding claims, wherein the fixed structure (11, 15, 16) is an internal fixed structure (11) of the nacelle (1).

11. A propulsion system for an aircraft, comprising an assembly as claimed in any of the preceding claims and a turbomachine (2), the fixed structure (11, 15, 16) of the nacelle (1) being suitable for being disposed around said turbomachine (2).

12. An aircraft comprising a propulsion system comprising an assembly as claimed in any of claims 1, 5, 6 or 7, or in any of claims 2, 4 or 9 when they are dependent on claim 1, and a turbomachine (2), the fixed structure (11, 15, 16) of the nacelle (1) being suitable for being disposed around the turbomachine (2), wherein each extinguisher (3) of the assembly is located between the thermal protection (4) and the internal surface (12) of the fixed structure (11, 15, 16) of the nacelle.

13. An aircraft comprising a propulsion system comprising an assembly as claimed in claim 2 or claim 8, or in any of claims 3, 4, 9 or 10 when they are dependent on claim 2, wherein each extinguisher (3) of the assembly is housed in the enclosure entirely delimited by the second thermal protection (42) by being entirely surrounded by the second thermal protection (42).
